# EUROPÄISCHE PATENTANMELDUNG

(11) **EP 0 938 961 A1**
(43) Veröffentlichungstag der Anmeldung: **01.09.1999**
(21) Anmeldenummer: 98103237.8
(22) Anmeldetag: 25.02.1998
(51) Int. Cl.: B29C 47/92, G01N 21/88, G01N 21/85

(54) **Spritzkopf für die Ummantelung von elektrischen Leitern**

(71) Anmelder: Paul Troester Maschinenfabrik, D-30519 Hannover (DE)
(72) Erfinder: Gohlisch, Hans-Joachim, Dipl.-Ing., 30519 Hannover (DE)
(74) Vertreter: Junius, Walther, Dr.

(57) **Zusammenfassung**

Die Erfindung betrifft einen Spritzkopf für die Ummantelung von Leitern oder Leiterbündeln bei der Herstellung von Kabeln, vorzugsweise Hoch- und Höchstspannungskabeln, mit einem zentralen, den Spritzkopf durchsetzenden Leiterzuführungskanal, mit Anschlüssen für mehrere Extruder, mit Ringdüsen, die den Leiterzuführungskanal umgeben, sowie mit Ringkanälen, die zwischen den Anschlüssen für die Extruder und den den Leiterzuführungskanal umgebende Ringdüsen angeordnet sind. Es ist die Aufgabe der Erfindung, eine Möglichkeit der Feststellung des Auftretens von Schmutz- und Gelpartikeln zu schaffen, die die Partikel so frühzeitig feststellt, daß die Produktionsanlage bereits vor dem Eintreten der Fehlpartikel in die Kabelummantelung abgeschaltet werden kann. Die Erfindung besteht darin, daß in dem Spritzkopf selbst mindestens ein den Extrudatfluß im Ringkanal für eine unter der aufgebrachten Außenschicht liegenden Isolierschicht beobachtender Sensor angeordnet ist. Die Messung im Spritzkopf selbst führt aber zu dem technischen Erfolg, daß Fehlpartikel rechtzeitig für ein Abschalten der Produktionsanlage oder Kennzeichnen vom Sensor erkannt werden können. Das ist insbesondere dann der Fall, wenn der Sensor oder sein Beobachtungsweg durch den Spritzkopf auf eine Stelle gerichtet ist, an der das Extrudat vom Extruder her über einen längeren Weg oder während einer längeren Verweilzeit geflossen ist. Die Fehlpartikel sind Schmutzpartikel und gelartige winzige Körper, die bereits in einem Vernetzungsvorgang befindlich sind oder einen solchen wegen ihrer Verweilzeit im Spritzkopf bereits durchlaufen haben. Daher findet man diese Partikel in sich über längere Wege fortbewegendem oder von Staustellen kommendem Extrudat.

## Beschreibung

Die Erfindung betrifft einen Spritzkopf für die Ummantelung von Leitern oder Leiterbündeln bei der Herstellung von Adern für Kabel, vorzugsweise Hoch- und Höchstspannungskabeln, mit einem den Spritzkopf durchsetzenden Leiterzuführungskanal , mit Anschlüssen für einen oder mehrere Extruder, mit Ringdüsen, die den Leiterzuführungskanal umgeben, sowie mit Ringkanälen als Verteilerkanälen mit Extrudatverteilungseinrichtungen, die zwischen den Anschlüssen für die Extruder und den den Leiterzuführungskanal umgebende Ringdüsen angeordnet sind.

Bei der Herstellung von Adern für Kabel, insbesondere Hoch- und Höchstspannungskabeln, werden in einem Extrusionsverfahren mit einem Querspritzkopf meist mehrere ummantelnde Schichten auf das Leiterbündel aufgebracht, oftmals eine innere und eine äußere Halbleiterschicht und dazwischen eine Isolierschicht. Eine hochwertige Isolationsschicht ist dadurch gekennzeichnet, daß sie frei von Fremdkörpern und Gelpartikeln ist. In der laufenden Produktion kann dieser Vorgang meist nur eine gewisse Zeit lang (max. drei Wochen) ausgeführt werden, denn nach längerer ununterbrochener Betriebsdauer können in dem ummantelnden Extrudat der Isolierschicht Gele bzw. teilweise vernetzte Extrudatpartikel auftreten, die verminderte Isolationswerte zur Folge haben, wodurch das Kabel an diesen Stellen die gewünschten Qualitätsparameter nicht erreicht und beim überschreiten bestimmter zulässiger Werte Ausschußware ist. Es ist ein Erfordernis, daß im ganzen produzierten Kabel derartige Stellen verminderter Isolation nicht vorkommen.

Die Feststellung derartiger Stellen verminderter Isolation durch Gelpartikel und Fremdkörper während der laufenden Produktion ist bisher nicht möglich. Da derartige Stellen verminderter Isolation nach einer bestimmten Produktionsdauer erstmalig und mit längerer Produktionsdauer immer häufiger vorkommen, läßt man aufgrund empirisch gefundener Produktionsdauerwerte die Produktionsanlage nur eine bestimmte Zeit in Betrieb, um sie dann abzuschalten und den Extruder und den Spritzkopf zu reinigen, wonach die Produktionsanlage wieder für eine bestimmte Produktionsdauer in Betrieb gesetzt werden kann und dann für eine bestimmte Zeit einwandfrei produziert. Die erreichten Produktionszeiten sind von der Qualität des Rohmaterials und in gewissem Maße von der Konstruktion und der Herstellungsqualität des Querspritzkopfes abhängig.

Die notwendigen Produktionsunterbrechungen von mehreren Stunden für die Reinigung sind teuer, da in dieser Zeit nicht produziert wird und Personal für die Reinigung zur Verfügung stehen muß. Auch ist das Wiederanfahren einer derartig umfangreichen Produktionsanlage aufwendig. Bei jedem Anfahren entstehen Anfahrverluste, bis die Anlage die erforderliche Produktqulität erzeugt.

Man hat daher versucht, während des Produktionsvorganges das Extrudat auf das Vorhandensein von Gelen, vernetzten Partikeln und sonstigen Verunreinigungen zu untersuchen, um die Produktionsanlage erst dann abzuschalten, wenn im Extrudat tatsächlich die beschriebenen Partikel in einem solchen Maße auftreten, daß der erforderte Qualitätsstandart des erzeugten Kabels nicht mehr gegeben ist. Dazu hat man zwischen den Extruder und den Spritzkopf ein Zwischenstück gesetzt, das von dem den Extruder verlassenden Extrudat durchflossen wird und bei diesem Durchfluß auf das Vorhandensein von den beschriebenen Partikeln untersucht wird. Da der den Extruder verlassende Extrudatstrom so dick ist, daß eine optische Untersuchung nicht möglich ist, diese optische Untersuchung jedoch gewünscht wird, weil sie mit erträglichem Aufwand durchführbar ist, hat man in diesem Zwischenglied zwischen Extruder und Spritzkopf den Extrudatstrom unter geometrischer Umformung durch einen breiten, jedoch wenig tiefen Abschnitt geführt, den man mit einer Kamera erfaßt hat, um in ihm die beschriebenen Fehlpartikel festzustellen.

Diese Untersuchungen des Extrudates an dieser Stelle führten nicht zu dem gewünschten Erfolg, da sich hinter der bisherigen Kontrollstelle bildende Gelteilchen nicht erfaßt werden.

Ursachen sind eine Reihe von Gründen:
1. Durch die Anordnung des Zwischenstückes im Fließkanal zwischen Extruder und Spritzkopf entstehen deutlich ungünstigere Fließverhältnisse mit der Gefahr der verstärkten Gelbildung bzw. -ansetzung. Aus diesem Grund sollte man immer die kürzesten Fließwege anstreben.
2. Zusätzlich wird durch die abweichende Kanalform (von rund auf sehr flach und wieder auf rund), auch bei gleichbleibender Querschnittsgröße, die Gefahr des Ansetzens bzw. der Entstehung von Gel erhöht.
3. Die Entstehung von Gel erfolgt zu einem wesentlichen Teil auch und gerade wegen des Zwischenstückes erst hinter der Kontrollstelle, wird also nicht erfaßt, mit der Folge, daß man die Produktion nicht rechtzeitig unterbrechen bzw. Schadstellen kennzeichnen kann.
4. Naturgemäß liegen besondere Gefahrenstellen der Gelbildung im Bereich des Spritzkopfes an den Umlenkungen und den Zusammenflußstellen, die somit ebenfalls nicht erfaßt werden.

Die Erfindung vermeidet die Nachteile des Standes der Technik. Es ist die Aufgabe der Erfindung, eine Möglichkeit der Feststellung des Auftretens der beschriebenen Fehlpartikel zu schaffen, die die Partikel so nahe wie möglich am Ummantelungspunkt feststellt, und zwar an einer Stelle, an der solche Partikel bevorzugt auftreten.

Die Erfindung besteht darin, daß in dem Spritzkopf selbst mindestens ein den Extrudatfluß im oder unmittelbar hinter dem Verteilerkanal für die unter der aufgebrachten Außenmantelschicht liegenden Isolierschicht beobachtender Sensor angeordnet ist.

Die Messung im Spritzkopf selbst ist an sich nicht anders und auch gegenüber der Messung in einem gesonderten Kanalstück (Zwischenstück) zwischen Extruder und Spritzkopf mit kaum erhöhtem Aufwand durchführbar, führt aber zu dem technischen Erfolg, daß die ideale Fließkanalgeometrie beibehalten und die besagten Fehlpartikel noch rechtzeitig und im Kontrollbereich auch vollständig für ein Abschalten der Produktionsanlage bzw. zum Kennzeichnen von isolationsgeschwächten Kabelstücken vom Sensor erkannt werden können, insbesondere dann, wenn sich die Kontrollstelle am besonders kritischen Zusammenflußpunkt befindet.

Das ist dann der Fall, wenn der Sensor oder sein Beobachtungsweg durch den Spritzkopf auf die Stellen gerichtet ist, an denen das Extrudat vom Extruder her über einen längeren Weg oder während einer gewissen Verweilzeit geflossen ist. Eine derartige Stelle ist der genannte Zusammenflußpunkt.

Wie von dem Erfinder festgestellt wurde, handelt es sich bei den Fehlpartikeln um irgendwelche Schmutzpartikel, in erster Linie aber um gelartige winzige Körper, die sich bereits im Vernetzungsvorgang befinden oder einen solchen wegen ihrer langen Verweilzeit im Spritzkopf oder auf ihrem Wege zum Spritzkopfmundstück bereits durchlaufen haben und dabei auch zu größeren Partikeln anwachsen können. Wenn man also die Beobachtung mit dem Sensor erst im Spritzkopf selbst und dann an einer solchen Stelle durchführt, an der erfahrungsgemäß sich fortbewegende oder von Verweilstellen kommende Verunreinigungen zu erwarten sind, wird die Feststellung so frühzeitig erfolgen, daß das betroffene Kabelstück gekennzeichnet werden bzw. die Produktionsanlage rechtzeitig abgeschaltet werden kann. Dabei geht die Erfindung von der Erkenntnis aus, daß die Bildung von Gelpartikeln weniger im Extruder als vielmehr im Spritzkopf erfolgt, wo Teile des Extrudates an bestimmten Stellen des Fließweges länger verweilen als andere Teile des Extrudates.

Dabei ist es vorteilhaft, wenn der Sensor oder sein Beobachtungsweg auf eine Stelle im Ringkanal gerichtet sind, an der dieser Kanal eine geringe Dicke aufweist. Während bei der Messung vor dem Eintritt des Extrudates in den Spritzkopf das Extrudat durch eine künstliche Dünnschichtstelle geführt werden muß, wobei eine solche künstliche Dünnschichtstelle eine Geometrie hat, die Verweilecken für Teile des Extrudates aufweist, an denen Vernetzungsvorgänge bereits einsetzen können, wird erfindungsgemäß an einer Stelle beobachtet, die von sich aus eine Dünnschichtstelle ist und an der das Extrudat im ständigen Fließvorgang, wenn auch vorzugsweise auf einem längeren Weg befindlich ist.

Das begründet den technischen Erfolg dieser Maßnahmen.

Vorteilhaft ist es für den Bau dieses Spritzkopfes, wenn der Sensor oder sein Beobachtungsweg durch den Spritzkopf zu einer druckfesten, jedoch für die vom Sensor aufgenommenen Strahlen oder Wellen durchlässigen Platte führt, welche Teil der äußeren Begrenzung des Verteilerkanales ist.

Der Sensor kann in verschiedener Weise ausgeführt werden, besonders zweckmäßig ist es jedoch, wenn der Sensor eine Kamera ist, der eine Lichtquelle zugeordnet ist, die auf der im Verteilerkanal gegenüberliegenden Seite der Wandung des Zuführungskanales angeordnet ist. Auf diese Weise können im Handel erhältliche Geräte zum Einsatz kommen.

Eine andere Möglichkeit besteht darin, daß der Sensor eine Kamera ist, der eine Lichtquelle zugeordnet ist, die auf eine spiegelnde Fläche an der im Verteilerkanal gegenüberliegenden Seite der Wandung des Zuführungskanales gerichtet ist.

Dabei ist es zweckmäßig, wenn der Sensor oder sein Beobachtungsweg durch den Spritzkopf im wesentlichen senkrecht zum Leiterzuführungskanal verlaufen.

Vorteilhaft ist es insbesondere, wenn der Sensor oder sein Beobachtungsweg durch den Spritzkopf zwischen dem Ort, an dem sich die Teile des Verteilerkanales zu einem Ringkanal vereinigen, und dem Ort angeordnet sind, an dem der Verteilerkanal der Außenummantelungsschicht beginnt.

Besonders zweckmäßig für eine besonders wirkungsvolle Messung ist es, und hier handelt es sich ja immer nur um eine Ausschnittmessung, weil nicht beliebig viele Sensoren bei den hohen Drücken im Spritzkopf zum Einsatz kommen können, daß der Sensor oder sein Beobachtungsweg durch den Spritzkopf an dem Ort oder kurz hinter dem Ort angeordnet ist, an dem zuerst Gelpartikel zu erwarten sind,, z.B. dort, wo sich die Teile des die Extrudatverteilung übernehmenden Verteilerkanales zu einem Ringkanal vereinigen.

Entsprechend ist es bei einem Spritzkopf mit mehreren Zuflußkanälen, die von einem oder mehreren Extrudern kommend das Extrudat in eine Schicht führen, vorteilhaft, wenn für jeden Zuflußkanal ein Sensor vorgesehen ist, wenn jeder Zuflußkanal in einen Verteilerkanal führt und wenn jeder Sensor oder sein Beobachtungsweg durch den Spritzkopf an dem Ort oder kurz hinter dem Ort angeordnet sind, an dem sich die Teile der die Extrudatverteilung übernehmenden Verteilerkanäle vereinigen.

Das Wesen der Erfindung ist nachstehend anhand eines in der Zeichnung schematisch dargestellten Ausführungsbeispieles näher erläutert. Es zeigen:

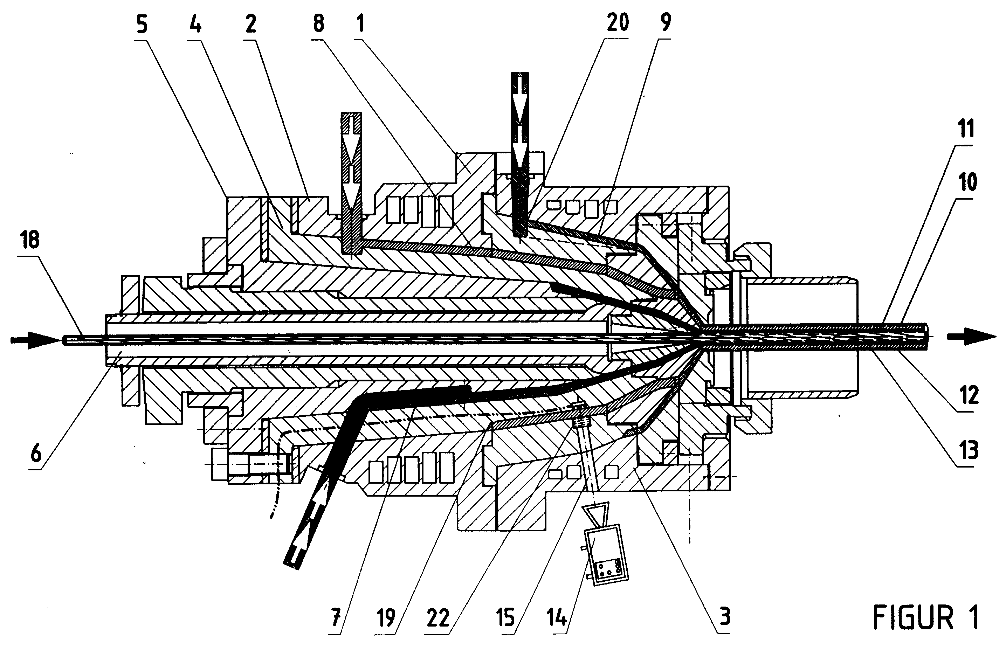

- Fig.1: einen Schnitt durch einen Querspritzkopf,

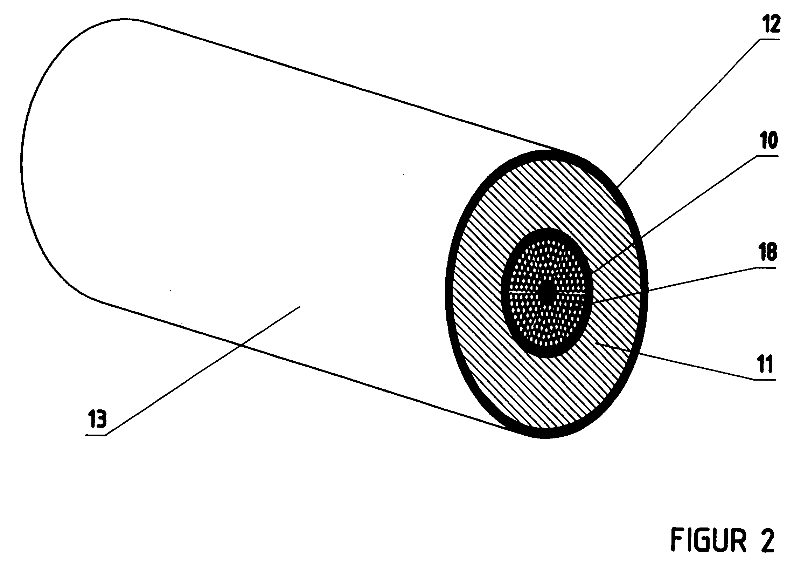

- Fig.2: einen Querschnitt durch eine isolierte Ader eines Hoch- und Höchstspannungskabels
- Fig.3: eine Ansicht einer optischen Sonde im Teilschnitt,
- Fig.4: eine Ansicht einer anderen optischen mit einem Reflektor ausgestatteten Sonde im Teilschnitt,

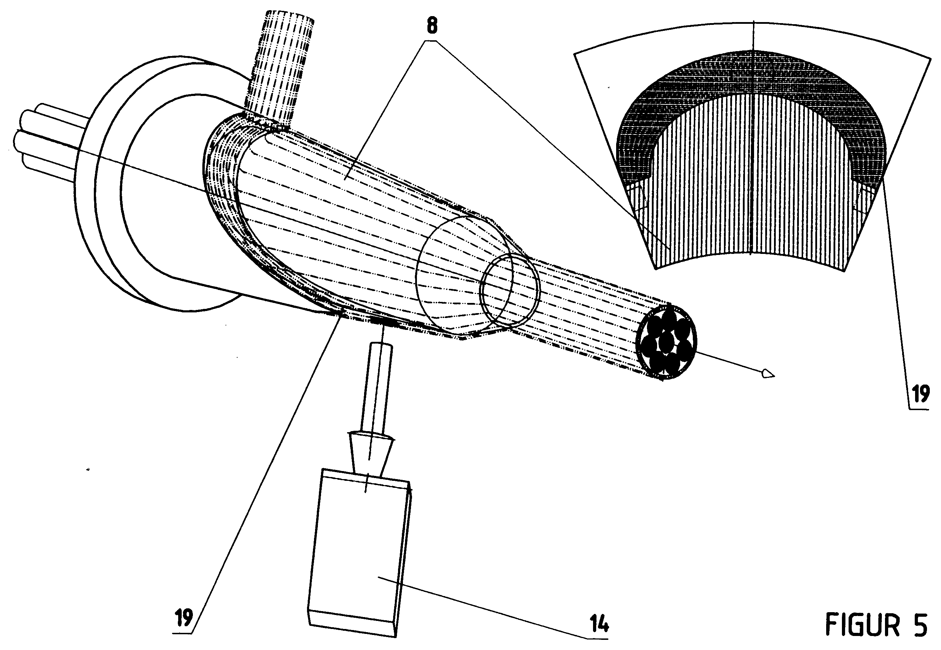

- Fig.5: eine perspektivische Ansicht eines durch den Verteilerkanal im Spritzkopf fließenden Extrudatstromes, der von einer Einspeisungsstelle aus gespeist ist, mit Abwicklung,

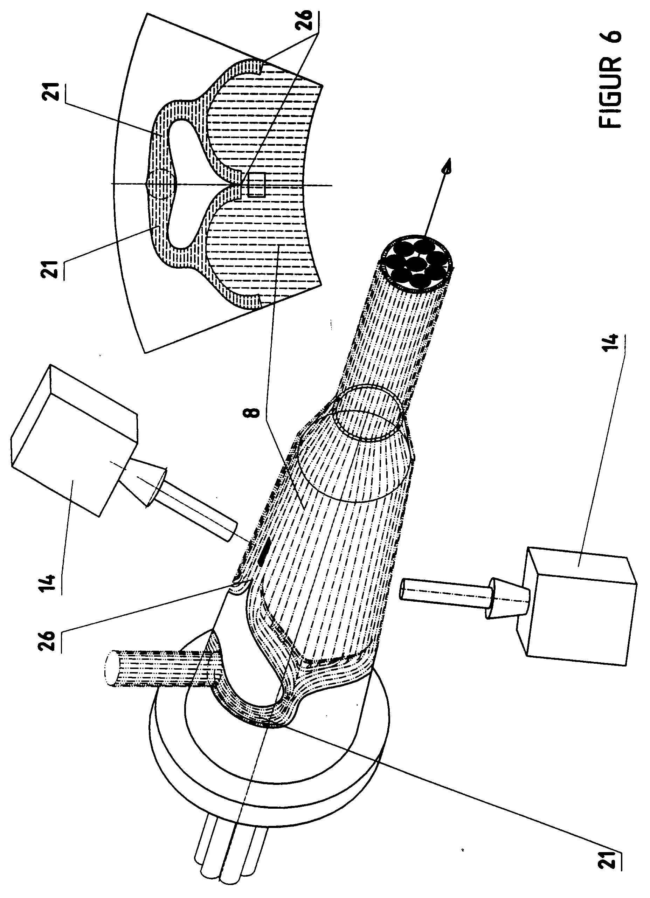

- Fig.6: eine perspektivische Ansicht eines durch den Verteilerkanal im Spritzkopf fließenden Extrudatstromes, der von zwei Einspeisungsstellen aus gespeist ist, mit Abwicklung.

Der Spritzkopf 1 ist aus mehreren, im wesentlichen konzentrisch angeordneten Teilen 2,3,4,5 aufgebaut, welche den Leiterzuführungskanal 6 umschließen, aber unterschiedliche Längen aufweisen. Zwischen den konzentrisch angeordneten Teilen 2,3,4,5 sind Verteilerkanäle 7,8,9 angeordnet, in denen ein als voll seinen Querschnitt ausfüllender Strang zugeführtes Extrudat zu einem hohlen Strang, der später eine Mantelschicht bildet, umgeformt wird. Von diesen Verteilerkanälen dient der Verteilerkanal 7 der Ausformung des die innere Halbleiterschicht 10 der Ader des Kabels bildenden Extrudatstromes, der Verteilerkanal 8 dient der Ausformung des die Isolationsschicht 11 der Ader des Kabels bildenden Extrudatstromes, während der Verteilerkanal 9 der Ausformung des die äußere Halbleiterschicht 12 der Ader des Kabels bildenden Extrudatstromes dient.

Insbesondere für Adern von Hoch- und Höchstspannungskabeln ist eine fehler- und fehlstellenfreie Isolationsschicht 11 von besonderer Wichtigkeit. Diese Isolationsschicht bedarf daher während der Produktion besonderer Reinheitsvorkehrungen und überwachung. Diese Überwachung ist vor dem Austritt der Ader des Kabels 13 aus dem Spritzkopf 1 durchzuführen. Dieser Überwachung dient ein Sensor in Form einer optischen Sonde 14, deren Ausgang 16 an ein computerisiertes Überwachungsgerät 17 angeschlossen ist. Diese Sonde 14 ist im wesentlichen senkrecht zum zu ummantelnden Leiterbündel 18 an einer Stelle angeordnet, an der der Sensor 14 oder sein Beobachtungsweg 15 durch den Spritzkopf 1 zwischen dem Ort 19, an dem sich die Teile des Verteilerkanales 8 zu einem Ringkanal vereinigen, und dem Ort 20 angeordnet, an dem der Verteilerkanal 9 der Außenummantelungsschicht beginnt.

Dieser Ort der Anordnung des Sensors 14 oder seines Beobachtungsweges 15 durch den Spritzkopf 1 liegt an dem Ort 19 oder kurz hinter dem Ort 19, an dem sich die Teile des die Extrudatverteilung der Isolationsschicht übernehmenden Verteilerkanales 8 zu einem Ringkanal vereinigen.

Hat der Spritzkopf 1 mehrere Zuflußkanäle 21 zu dem Verteilerkanal 8, die vom Extruder kommend das Extrudat in die Isolationsschicht 11 führen, ist für jeden Zuflußkanal ein Sensor 14 vorgesehen. In diesem Falle ist jeder Sensor 14 oder sein Beobachtungsweg 15 durch den Spritzkopf 1 an dem Ort 26 oder kurz hinter dem Ort 26 angeordnet, an dem sich die Teile der die Extrudatverteilung übernehmenden Verteilerkanäle vereinigen.

Damit ist der Sensor 14 oder sein Beobachtungsweg durch den Spritzkopf auf eine Stelle gerichtet, an der das Extrudat vom Extruder her über einen besonders langen Weg und während einer längeren Verweilzeit geflossen ist.

Damit ist aber auch der Sensor 14 oder sein Beobachtungsweg auf eine Stelle im Verteilungskanal 8 gerichtet, an der dieser Kanal eine geringe Dicke aufweist, so daß das fließende Extrudat in seiner ganzen Dicke beobachtet werden kann.

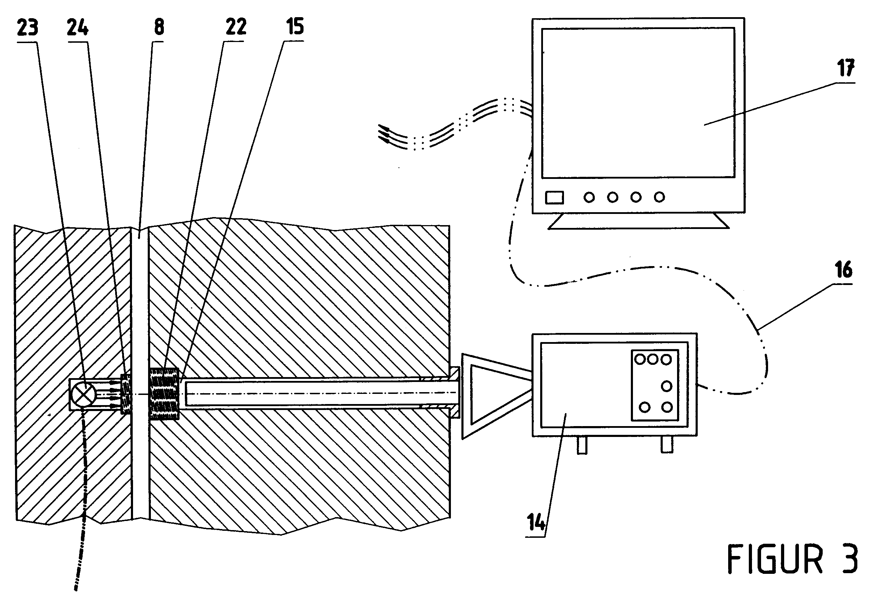

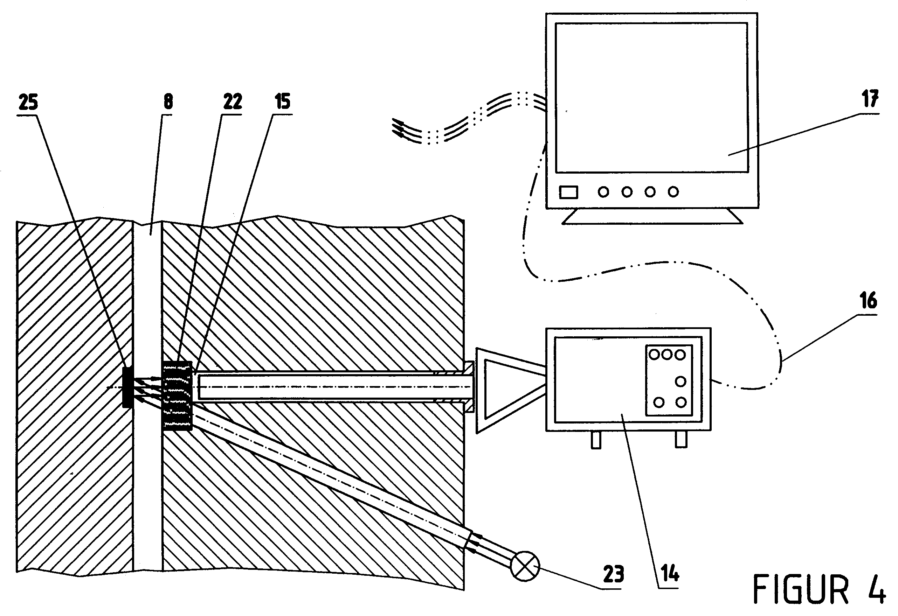

Der optische Sensor 14 ist am Ende des Beobachtungsweges 15 angeordnet, an dessen Anfang ein durchsichtiger Körper in Form einer Glasplatte 22 befindlich ist, die einen Teil der Wandung des Verteilerkanales 8 bildet. Dieser optische Sensor 14 ist eine für die zeitlich fortlaufende Beobachtung eingerichtete Kamera. Die notwendige Beleuchtung des Beobachtungsortes erfolgt durch eine Lichtquelle 23, welche in Fig.3 an einem der Glasplatte 22 gegenüberliegenden Ort hinter einer Glasplatte 24 angeordnet ist, und welche gemäß Fig.4 in der Kamera oder in oder neben dem Beobachtungsweg 15 angeordnet ist, wobei an dem der Glasplatte 22 gegenüberliegenden Ort eine spiegelnde Fläche 25 befindlich ist.

### Liste der Bezugszeichen

- 1: Spritzkopf
- 2: Spritzkopfteil
- 3: Spritzkopfteil
- 4: Spritzkopfteil
- 5: Spritzkopfteil
- 6: Leiterzuführungskanal
- 7: Verteilerkanal
- 8: Verteilerkanal
- 9: Verteilerkanal
- 10: innere Halbleiterschicht
- 11: Isolationsschicht
- 12: äußere Halbleiterschicht
- 13: Ader
- 14: Sonde
- 15: Beobachtungsweg
- 16: Ausgang
- 17: Überwachungsgerät
- 18: Leiter / Leiterbündel
- 19: Ort
- 20: Ort
- 21: Zuflußkanal
- 22: Glasplatte
- 23: Lichtquelle
- 24: Glasplatte
- 25: spiegelnde Fläche.
- 26: Ort

## Patentansprüche

1. Spritzkopf für die Ummantelung von Leitern oder Leiterbündeln bei der Herstellung von Kabeln, vorzugsweise Hoch- und Höchstspannungskabeln,
mit einem den Spritzkopf durchsetzenden Leiterzuführungskanal, mit Anschlüssen für einen oder mehrere Extruder, mit Ringdüsen, die den Leiterzuführungskanal umgeben, sowie mit Ringkanälen als Verteilerkanal mit Extrudatverteilungseinrichtungen, die zwischen den Anschlüssen für die Extruder und den den Leiterzuführungskanal umgebende Ringdüsen angeordnet sind,
dadurch gekennzeichnet,
daß in dem Spritzkopf (1) mindestens ein den Extrudatfluß im Ringkanal (8) für eine unter der aufgebrachten Außenschicht (12) liegenden Isolationsschicht (11) beobachtender Sensor (14) zur Feststellung von Gelteilchen und Fremdpartikeln angeordnet ist.

2. Spritzkopf nach Anspruch 1,
dadurch gekennzeichnet,
daß der Sensor (14) oder sein Beobachtungsweg (15) durch den Spritzkopf (1) zu einer druckfesten, jedoch für die vom Sensor (14) aufgenommenen Strahlen oder Wellen durchlässigen Platte (22) führt, welche Teil der äußeren Begrenzung des Ringkanales (8) ist.

3. Spritzkopf nach Anspruch 1,
dadurch gekennzeichnet,
daß der Sensor (14) eine Kamera ist, der eine Lichtquelle (23) zugeordnet ist, die auf der im Ringkanal (8) gegenüberliegenden Seite der Wandung dieses Ringkanales (8) angeordnet ist.

4. Spritzkopf nach Anspruch 1
dadurch gekennzeichnet,
daß der Sensor (14) eine Kamera ist, der eine Lichtquelle (23) zugeordnet ist, die auf eine spiegelnde Fläche (25) an der im Ringkanal (8) gegenüberliegenden Seite der Wandung dieses Ringkanales (8) gerichtet ist.

5. Spritzkopf nach Anspruch 1,
dadurch gekennzeichnet,
daß der Sensor (14) oder sein Beobachtungsweg (15) durch den Spritzkopf (1) auf kürzestem Weg im wesentlichen senkrecht zum Leiterzuführungskanal (6) verlaufen.

6. Spritzkopf nach Anspruch 1,
dadurch gekennzeichnet,
daß der Sensor (14) oder sein Beobachtungsweg (15) durch den Spritzkopf (1) zwischen dem Ort, an dem sich die Teile des Verteilerkanales (8) zu einem Ringkanal vereinigen, und dem Ort angeordnet sind, an dem der Verteilerkanal (9) der Außenschicht beginnt.

7. Spritzkopf nach Anspruch 1
dadurch gekennzeichnet,
daß der Sensor (14) oder sein Beobachtungsweg (15) durch den Spritzkopf (1) an dem Ort (19) oder kurz hinter dem Ort (19) angeordnet sind, an dem sich die Teile des die Extrudatverteilung übernehmenden Kanales (8) zu einem Ringkanal vereinigen.

8. Spritzkopf mit mehreren Zuflußkanälen, die von einem oder mehreren Extrudern kommend das Extrudat in eine ein- oder mehrlagige Isolationsschicht führen, nach Anspruch 1,
dadurch gekennzeichnet,
daß für jeden Zuflußkanal einer Isolationsschicht ein Sensor vorgesehen ist,
daß jeder Zuflußkanal in einen Ringkanal führt und daß jeder Sensor oder sein Beobachtungsweg durch den Spritzkopf an dem Ort oder kurz hinter dem Ort angeordnet sind, an dem sich die Teile der die Extrudatverteilung übernehmenden Ringkanäle vereinigen.

9. Spritzkopf nach Anspruch 1,
dadurch gekennzeichnet,
daß der Sensor (14) oder sein Beobachtungsweg (15) durch den Spritzkopf (1) auf eine Stelle gerichtet ist, an der das Extrudat vom Extruder her über einen besonders langen Weg oder während einer besonders langen Verweilzeit geflossen ist.

10. Spritzkopf nach Anspruch 1
dadurch gekennzeichnet,
daß der Sensor (14) oder sein Beobachtungsweg (15) auf eine Stelle im Verteilungskanal (8) gerichtet sind, an der dieser Ringkanal (8) eine geringe Dicke aufweist.
